# FASCICULE DE BREVET EUROPEEN

(11) **EP 2 821 828 B1**
(45) Date de publication et mention de la délivrance du brevet: **22.06.2022**
(21) Numéro de dépôt: 14164495.5
(22) Date de dépôt: 11.04.2014
(51) Int. Cl.: G02B 6/38

(54) **ADAPTATEUR POUR UN CONNECTEUR MULTI-CONTACTS À BOÎTIER ET CONNECTEUR MULTI-CONTACTS ASSOCIÉ**
ADAPTER FÜR EINEN MULTIKONTAKT-STECKVERBINDER MIT GEHÄUSE UND ENTSPRECHENDER MULTIKONTAKT-STECKVERBINDER
ADAPTOR FOR A MULTI-TERMINAL CONNECTOR WITH A HOUSING AND RELATED MULTI-TERMINAL CONNECTOR

(30) Priorité: 15.04.2013 FR 1353390
(43) Date de publication de la demande: 07.01.2015
(73) Titulaire: RADIALL, 93300 Aubervilliers (FR)
(72) Inventeur: Mougin, Sylvain, 37110 LE BOULAY (FR); Demaret, Emmanuel, 37100 TOURS (FR); Sourdillon, Gilles, 41100 MESLAY (FR)
(74) Mandataire: Nony

(56) Documents cités:
- CH-A1- 706 932
- GB-A- 2 472 584
- US-A- 3 995 363
- US-A1- 2003 156 797
- US-A1- 2004 091 214
- US-A1- 2006 193 562

## Description

La présente invention a pour objet un adaptateur pour connecteur, notamment pour un connecteur multicontacts et un connecteur associé, utilisé notamment dans le domaine aéronautique/militaire et plus généralement en environnement sévère.

Il existe actuellement des connecteurs optiques du type comportant un boîtier logeant un insert, cet insert comportant une pluralité de cavités pour recevoir chacune un élément de contact optique. Un élément de contact optique comporte notamment une pièce désignée usuellement sous le nom de ferrule définissant une face optique et un corps dans lequel est montée la ferrule et portant une fibre optique en regard de la ferrule. Une pièce supplémentaire à fonction d'adaptateur, usuellement désigné sous sa dénomination anglosaxonne « *sleeve holder* », est fixée sur l'insert, cette pièce comportant une pluralité d'alvéoles s'étendant chacune dans le prolongement d'une cavité de l'insert. Chaque alvéole loge un manchon d'alignement apte à loger deux ferrules afin de permettre l'alignement entre deux éléments de contact optique devant être mis en regard pour établir la connexion par fibre optique.

Dans ces connecteurs optiques connus, afin de permettre l'accès à chaque ferrule et chaque manchon d'alignement pour autoriser, lors d'une maintenance, une inspection visuelle et le cas échéant un nettoyage de chaque face optique de contacts, la fixation d'un adaptateur sur un insert est prévue amovible par vissage d'une vis généralement prévue à un emplacement central en face avant de l'adaptateur. Ainsi, le démontage amovible de l'adaptateur permet à la fois l'accès visuel et l'accès à un moyen de nettoyage, tel qu'un coton-tige imbibé d'alcool, à l'intérieur de chaque manchon d'alignement et à chaque face optique, ce qui ne peut être réalisé de manière satisfaisante à travers les alvéoles du « *sleeve holder ».*

Ces connecteurs optiques connus peuvent être ceux commercialisés par la société RADIALL sous la dénomination de gamme LuxCis^{®}, notamment les connecteurs de la série EPXA et B. On pourra se reporter avantageusement à la demande de brevet US2006/134990.

Si dans ces connecteurs optiques connus, la solution de fixation amovible par vis de l'adaptateur à l'insert est satisfaisante pour le nettoyage précité, elle a pour inconvénient d'occasionner une perte de densité des contacts optiques de par l'encombrement intrinsèque requis par les vis et leurs logements.

Il existe également des contacts optiques logés dans un insert, dans lesquels l'élément de contact optique est monté avec flottement axial à l'intérieur d'une cavité de l'insert.

Plus précisément, à l'intérieur de l'insert est montée une ferrule définissant également une face optique. L'insert femelle porte en son sein un manchon d'alignement apte à loger la ferrule et porte une fibre optique en regard de la ferrule. La ferrule traverse le manchon d'alignement et fait saillie de l'insert afin de permettre le nettoyage de la face optique.

Ces contacts optiques connus sont donc montés dans les cavités d'inserts de connecteurs.

Ces contacts optiques connus peuvent être ceux commercialisés par la société RADIALL.

L'inconvénient majeur de ces contacts optiques, est que le nettoyage d'un manchon d'alignement nécessite de fait le démontage du contact proprement dit, avec le risque inhérent de pollution à la réinsertion dudit manchon lors du remontage.

La demande US 2006/193562 A1 décrit un connecteur multi-contacts optiques comportant un insert logé dans un boîtier, le boîtier comprenant une cavité recevant un adaptateur retenu de manière amovible dans cette cavité.

Il existe donc un besoin pour améliorer les connecteurs de type optique notamment afin d'augmenter la densité de contacts optiques et de faciliter le nettoyage des manchons d'alignement logeant les ferrules des contacts optiques.

Le but de l'invention est de répondre au moins en partie à ce besoin.

L'invention a ainsi pour objet un adaptateur pour connecteur selon la revendication 1.

Par « comportant en son sein », on entend, au sens de l'invention, que l'insert peut être soit fixé de manière amovible au boitier, soit fixé de manière permanente au boitier, soit faire partie intégrante du boitier, c'est-à-dire réalisé en une seule pièce avec le boitier.

L'adaptateur selon l'invention permet de réaliser un montage/démontage aisé et rapide à un boitier de connecteur, notamment de connecteur multi-contacts.

Grâce à l'invention, par simple démontage de l'adaptateur, il est possible d'avoir un accès visuel et pour le nettoyage à la fois à l'intérieur des manchons d'alignement qui restent logés dans l'adaptateur et aux faces optiques des éléments optiques de type femelle logés dans les cavités de l'insert et qui font saillie à l'extérieur une fois l'adaptateur enlevé.

En outre, du fait de sa fixation amovible au boitier du connecteur, on augmente la densité possible des contacts optiques dans un même connecteur comparativement à une fixation amovible par vis de l'adaptateur à l'insert du connecteur. Autrement dit, on s'affranchit de la solution par vissage selon l'état de l'art qui intrinsèquement implique un encombrement nécessaire à la vis et donc une place disponible pour les éléments de contact optique moindre.

De préférence, l'adaptateur comporte deux ergots de clipsage, l'un étant agencé sur une première de ses faces latérales et l'autre étant agencé sur une deuxième de ses faces latérales, opposée à la première.

En insérant les becs d'une pince de préhension de part et d'autre de l'adaptateur et à l'intérieur du boitier, on peut venir mettre les becs en butée sur les ergots de clipsage, ce qui les rapproche mutuellement et libère les ergots et donc, l'adaptateur de l'intérieur du boitier.

Selon une variante de réalisation avantageuse, l'adaptateur comporte deux pièces assemblées entre elles, notamment par collage, l'une définissant la face avant, et l'autre la face arrière de l'adaptateur opposée à sa face avant.

De préférence, l'adaptateur est réalisé en au moins un matériau isolant électriquement notamment une matière plastique.

De préférence encore, le ou les ergots de clipsage est (sont) venu(s) de moulage avec l'une de ses pièces le constituant.

Dans un exemple de mise en œuvre de l'invention, l'alvéole de premier type comporte au moins une lèvre de maintien, notamment deux lèvres de maintien, chacune disposée à une extrémité de l'alvéole, cette ou ces lèvres pouvant être élastiquement déformables ou non, notamment annulaires, et agencées pour maintenir un manchon d'alignement introduit dans cette alvéole.

Selon une caractéristique avantageuse, la ou les alvéoles s'étende(nt) de la face avant à la face arrière de l'adaptateur.

Selon une variante de réalisation avantageuse, la ou les alvéoles comporte(nt) au moins une lèvre de maintien, notamment deux lèvres de maintien, chacune agencée à une extrémité de l'alvéole, cette ou ces lèvres, notamment annulaires, étant apte(s) à maintenir un manchon d'alignement logé dans cette alvéole.

De préférence, le ou les manchons d'alignement, notamment fendu(s), est (sont) en céramique.

La face avant et la face arrière de l'adaptateur peuvent être de forme générale sensiblement rectangulaire ou carrée ou, en variante, présenter chacune une forme générale sensiblement en disque.

L'invention a encore pour objet un connecteur selon la revendication 11.

Selon l'invention, le(s) moyen(s) de fixation de l'adaptateur consiste(nt) en au moins un ergot de clipsage agencé sur une de ses faces latérales à sa face avant, l'ergot de clipsage étant apte à être clipsé dans une encoche agencée dans la paroi intérieure du boitier de connecteur.

Le boîtier peut présenter au moins une section transversale rectangulaire ou carrée ou en variante au moins une section transversale circulaire.

L'invention a encore pour objet un procédé de réalisation de connexions optiques, à l'aide d'un premier connecteur comportant un premier insert avec des cavités, un deuxième connecteur apte à être accouplé au premier, comportant un deuxième insert avec des cavités, et un adaptateur tel que décrit précédement, l'un des premier et deuxième connecteurs comportant un boitier comportant en son sein le premier ou le deuxième insert, le procédé comportant les étapes suivantes:
- fixer de manière amovible l'adaptateur au boitier de l'un des premier et deuxième connecteurs,
- monter des éléments de contact optique sur les premier et deuxième inserts,
- accoupler les connecteurs de manière à ce que l'adaptateur soit pris en sandwich entre les inserts, et réaliser des connexions optiques entre les connecteurs.

L'invention a enfin pour objet un procédé de maintenance d'un connecteur décrit précédemment, comportant les étapes suivantes :
- démonter l'adaptateur du boitier du connecteur,
- le cas échéant, nettoyer, notamment à l'aide d'un coton-tige imbibé d'alcool l'intérieur du ou des manchons d'alignement logé(s) dans l'adaptateur,
- le cas échéant, nettoyer, notamment à l'aide d'un coton-tige imbibé d'alcool, la ou les faces optique définies chacune par la ferrule (40) d'un élément de contact optique,
- une fois le(s) nettoyage(s) éventuel(s) réalisé(s), remonter par fixation amovible l'adaptateur à l'intérieur du boitier.

Les premier et deuxième inserts peuvent être connus en soi.

L'adaptateur d'un connecteur, notamment un connecteur multi-contacts, selon l'invention peut en outre comporter une ou plusieurs alvéoles de logement d'éléments de contact électrique mâles et/ou femelles logés dans les cavités d'un insert. Autrement dit, l'invention s'applique également à un connecteur, notamment un connecteur multicontacts mixte, c'est-à-dire un ou plusieurs éléments de contact optique avec un ou plusieurs contacts électrique.

L'invention pourra être mieux comprise à la lecture de la description détaillée qui va suivre, d'exemples de mise en œuvre non limitatifs de l'invention, et à l'examen du dessin annexé, sur lequel:
- la figure 1 représente, schématiquement et partiellement, en perspective, différents éléments d'un premier connecteur multi-contacts selon l'état de l'art,
- la figure 1A représente en coupe longitudinale suivant A-A, les éléments de la figure 1, assemblés,
- la figure 2 est une vue de face suivant II-II, de l'insert du connecteur de la figure 1,
- la figure 3 est une vue de face suivant III-III, de l'insert du connecteur de la figure 1A,
- la figure 4 est une vue schématique, en perspective, d'une pluralité d'éléments de contact optique dans un insert selon l'état de l'art,
- la figure 4A représente en coupe longitudinale suivant A-A, un élément de contact optique de la figure 4 tel que logé dans l'insert selon l'état de l'art,
- la figure 5 est une vue, schématique et partielle, en perspective, d'un adaptateur selon l'invention,
- les figures 6A à 6C montrent en vue en perspective les différentes étapes de démontage à l'aide d'une pince de préhension d'un adaptateur fixé de manière amovible à un boitier de connecteur multi-contacts conformément à l'invention,
- les figures 7A à 7D montrent en vue de coupe les différentes étapes de démontage à l'aide d'une pince de préhension d'un adaptateur fixé de manière amovible à un boitier de connecteur multi-contacts conformément à l'invention, les figures 7A à 7C correspondant respectivement aux figures 6A à 6C, la figure 7D correspondant à l'étape d'enlèvement de l'adaptateur déjà démonté de sa pince de préhension.

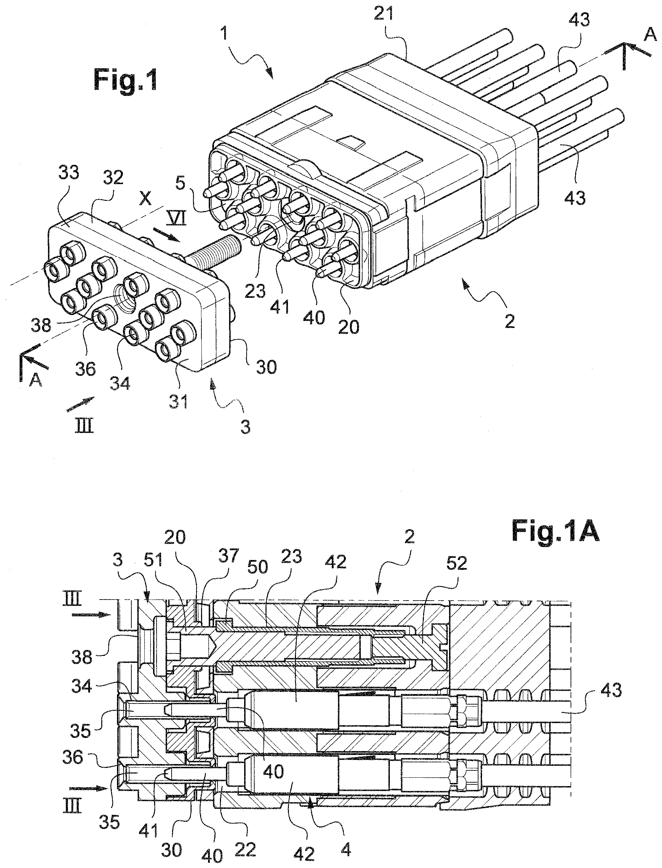

Par souci de clarté, les mêmes références désignant les mêmes éléments d'un connecteur selon l'état de l'art et d'un connecteur selon l'invention sont utilisées pour toutes les figures 1 à 7D.

On a représenté sur les figures 1 à 3, les différents éléments d'un connecteur multi-contacts selon l'état de l'art désigné globalement par la référence 1.

Un tel connecteur 1 comporte principalement un insert 2, un adaptateur 3 et des éléments de contacts optiques 4 logés dans l'insert 2.

L'insert 2 présente une forme sensiblement parallélépipédique, avec des faces avant 20 et arrière 21. L'insert 2 comporte en outre une pluralité de cavités 22 s'étendant parallèlement à son axe longitudinal X, entre les faces arrière 21 et avant 20.

Dans l'exemple considéré, les cavités 22 sont toutes identiques.

Chaque cavité 22 peut recevoir indifféremment un élément de contact optique 4. En variante, il est possible de prévoir sur l'insert 2 au moins deux cavités ayant des formes différentes. Ainsi, bien que non représenté, l'insert 2 peut également être configuré pour qu'au moins une des cavités 22 reçoive un élément de contact électrique.

Chaque élément de contact optique 4 comporte une ferrule 40 définissant une face optique 41 et un corps 42 dans lequel est montée la ferrule 40 et portant une fibre optique 43 en regard de la ferrule 40. Le montage de la ferrule 40 dans le corps 42 est réalisé avec un flottement axial selon l'axe X.

L'insert 2 comporte en outre un perçage 23 permettant de recevoir des éléments 5 de fixation amovible de l'adaptateur 3 sur l'insert 2.

Ces éléments de fixation 5 comportent par exemple un manchon 50 fileté intérieurement dans lequel peuvent être fixées, à une extrémité, une première vis 51 et, à une extrémité opposée, une deuxième vis 52.

L'insert 2 et les éléments de contact optique 4 peuvent être du type de ceux utilisés dans les connecteurs optiques commercialisés par la société RADIALL sous la dénomination de gamme LuxCis^{®}, notamment les connecteurs de la série EPXA et B.

L'adaptateur 3 présente une première face principale 30 destinée à venir s'appliquer contre la face avant 20 de l'insert 2 et une deuxième face principale 31 opposée à la première 30.

Dans l'exemple considéré, les faces 30 et 31 sont sensiblement planes et présentent une forme sensiblement rectangulaire.

L'adaptateur 3 comporte deux éléments 32 et 33 assemblés entre eux, l'élément 32 définissant la première face 30 et l'élément 33 la deuxième face 31.

Dans l'exemple considéré, les éléments 32 et 33 sont réalisés en un matériau isolant électrique, notamment en une matière plastique.

L'adaptateur 3 comporte une pluralité d'alvéoles 34 dans chacune desquelles est emmanché un manchon d'alignement 35 qui est fendu, lui-même apte à loger une ferrule 40 d'un élément de contact optique 4, comme illustré sur la figure 1A.

Chaque alvéole 34 comporte à chacune de ses extrémités une lèvre de maintien 36 permettant de maintenir le manchon d'alignement fendu 35 dans l'alvéole 34.

Chaque lèvre de maintien 36 est réalisée sur une portion tubulaire faisant saillie sur la première face 30 ou la deuxième face principale 31 de l'adaptateur 3.

Chacune des alvéoles 34 de l'adaptateur 3 est destinée à être disposée dans le prolongement d'une cavité 22 de l'insert 2 pour permettre le logement d'une ferrule 40 dans le manchon d'alignement 35.

Tel qu'illustré, le connecteur multi-contacts selon l'état de l'art comporte un nombre de douze alvéoles 34 réparties suivant trois rangées de quatre alvéoles chacune.

En variante, les alvéoles 34 peuvent être plus ou moins nombreuses, l'adaptateur 3 pouvant comporter par exemple une unique alvéole 34. Le connecteur multicontact 1 est alors réduit à un connecteur mono-contact.

L'adaptateur 3 présente un logement 37 permettant de recevoir la tête de la première vis 51 de fixation amovible de l'adaptateur 3 à l'insert 2. Le logement 37 et donc la tête de la première vis 51 est accessible pour un tournevis par le perçage 38.

Tel qu'illustré, le logement 37 est réalisé à un emplacement central de l'adaptateur 3.

La tête de la première vis 51 peut être mise en place dans le logement 37 au moment de l'assemblage des éléments 32 et 33 de l'adaptateur 3.

L'adaptateur 3 est assemblé avec l'insert 2 en vissant la première vis 51 sur le manchon 50 fileté intérieurement.

Dans un tel connecteur multi-contacts 1 selon l'état de l'art, un élément de contact optique 4 peut être introduit, c'est-à-dire logé, dans une cavité 22 et dans une alvéole 34 de sorte que la ferrule 40 de l'élément de contact optique 4 soit engagée dans le manchon fendu 35, comme illustré sur la figure 1A.

Le connecteur 1 est destiné à être accouplé à un connecteur complémentaire (non représenté) comportant un insert identique à l'insert 2 recevant des éléments de contact optique identiques.

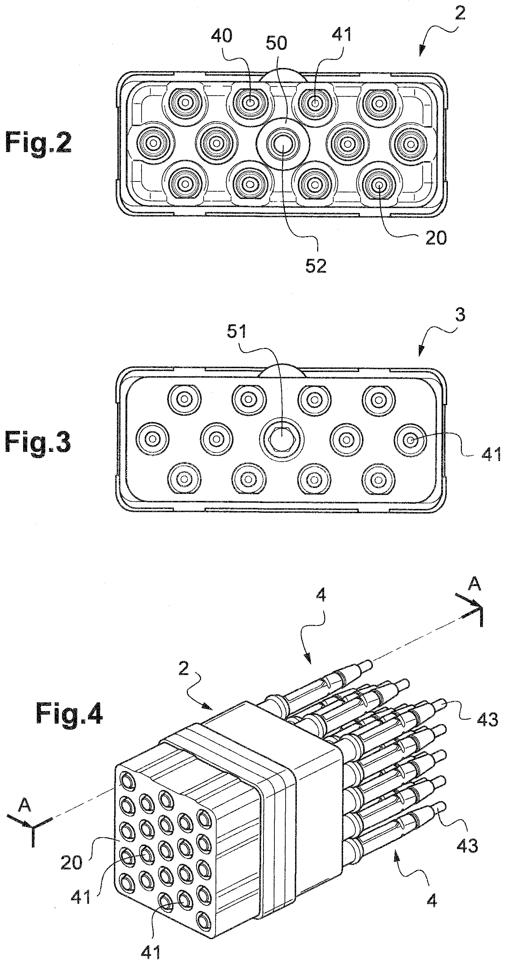

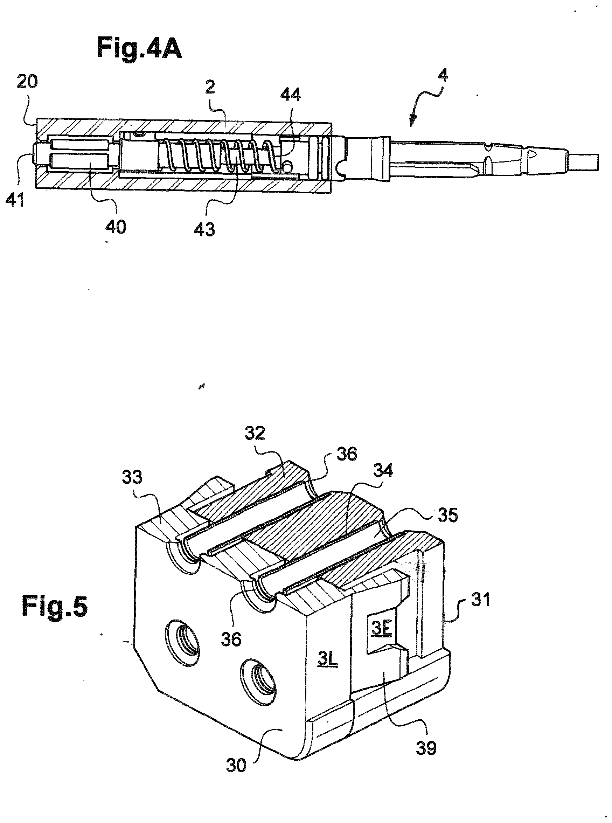

On a représenté sur les figures 4 et 4A les différents éléments, d'un élément de contact optique 4 respectivement avec un insert 2 selon l'état de l'art.

Chacun de ces éléments de contact optique 4 représentés aux figures 4 et 4A comporte une ferrule 40 définissant également une face optique 41 et un insert 2 dans lequel est montée la ferrule 40 et portant une fibre optique 43 en regard de la ferrule 40.

L'insert 2 loge ainsi chaque ferrule 40 de contact optique 4. Le montage de la ferrule 40 dans l'insert 2 est ainsi réalisé avec l'emmanchement de la ferrule 40 dans l'insert 2 et avec un flottement axial et de la ferrule 40 dans l'insert 42 grâce au ressort hélicoïdal de compression 44.

Afin de remédier aux inconvénients majeurs des connecteurs optiques et contacts optiques logés dans un insert selon l'état de l'art qui viennent d'être décrit, notamment une moindre densité de contacts optiques liées à la présence du système de vissage 50, 51, 52 central du connecteur des figures 1 et 1A, et une difficulté de nettoyage des manchons d'alignement 35 des contacts optiques des figures 4 et 4A, les inventeurs ont pensé à réaliser une nouvelle configuration de fixation amovible de l'adaptateur à l'intérieur du boitier 6 d'un connecteur 1.

Ainsi, un adaptateur 3 selon l'invention comporte au moins un moyen de fixation amovible à l'intérieur du boitier 6 d'un connecteur, dans sa configuration d'appui de sa face avant 30 contre la face avant 20 de l'insert 2. La fixation amovible est réalisée par clipsage.

Les avantages procurés par un adaptateur selon l'invention comparativement à un adaptateur selon l'état de l'art sont nombreux, notamment comme suit :
- augmentation de la densité des éléments de contact optique du fait de l'absence de moyens de fixation (vis) qui traversent l'adaptateur ;
- facilité de démontage avec un outil, tel qu'une pince de préhension à bec que l'on peut trouver usuellement dans le domaine de l'électronique ;
- parfait guidage des éléments de contact optique directement dans le boitier.

Dans l'exemple illustré en figure 5, l'adaptateur 3 comporte deux ergots de clipsage 39. Un des ergots 39 est agencé sur une des faces latérales 3L à la face avant 30 de l'adaptateur 3. L'autre des ergots de clipsage 39 est agencé sur la face latérale 3L opposé. Chaque ergot de clipsage 39 est apte à être clipsé dans une encoche de clipsage 61 prévue à cet effet, agencée dans la paroi intérieure du boitier 6 d'un connecteur 1.

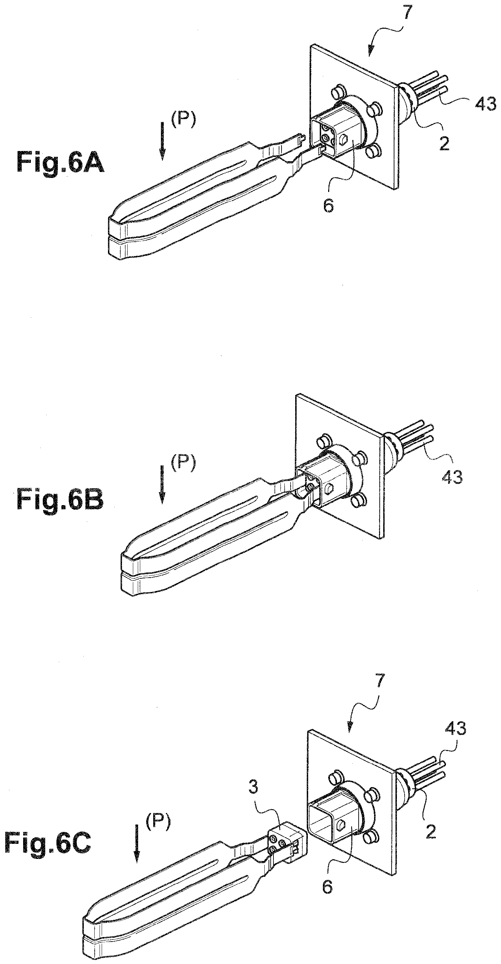

Par ailleurs, comme montré en figure 6, l'adaptateur 3 selon l'invention dont les faces avant 30 et arrière 31 sont de forme générale carrée, comporte une pluralité d'alvéoles 34 aptes chacune à loger un manchon d'alignement 35, notamment fendu.

Chaque alvéole 34 s'étend de la face avant 30 à la face arrière 31 de l'adaptateur 3.

Chaque alvéole 34 comporte deux lèvres de maintien 36 de forme annulaire, chacune étant agencée à une extrémité de l'alvéole. Ces lèvres 36 maintiennent un manchon d'alignement 35, en céramique logé dans cette alvéole 34.

L'insert 2 peut être standard, tel que celui selon l'état de l'art décrit en référence aux figures 1 et 1A et commercialisé sous la référence commerciale du connecteur EPX par la société RADIALL.

On décrit maintenant les étapes de réalisation des connexions optiques, à l'aide d'un connecteur 1 multi-contacts selon l'invention, comportant un insert 2 avec des cavités 22, un boitier 6 à l'intérieur duquel est fixé l'insert 2 et un adaptateur 3 qui vient d'être décrit. On procède de la manière suivante :
- fixer de manière amovible l'adaptateur 3 au boitier 6 du connecteur multicontact 1,
- monter des éléments de contact optique sur l'insert 2 du connecteur 1 et sur un insert non représenté d'un connecteur multi-contacts complémentaire au connecteur 1,
- accoupler le connecteur 1 et celui complémentaire de manière à ce que l'adaptateur 3 soit pris en sandwich entre les inserts, et réaliser des connexions optiques entre les connecteurs.

On décrit maintenant en référence aux figures 6A à 7D, les étapes de démontage d'un adaptateur selon l'invention du boitier en vue d'assurer sa maintenance, c'est-à-dire l'accès visuel et le cas échéant pour un nettoyage à l'intérieur de chacun des manchons d'alignement 35 et à chaque face optique 41 de ferrule 40 des éléments de contact optique 4.

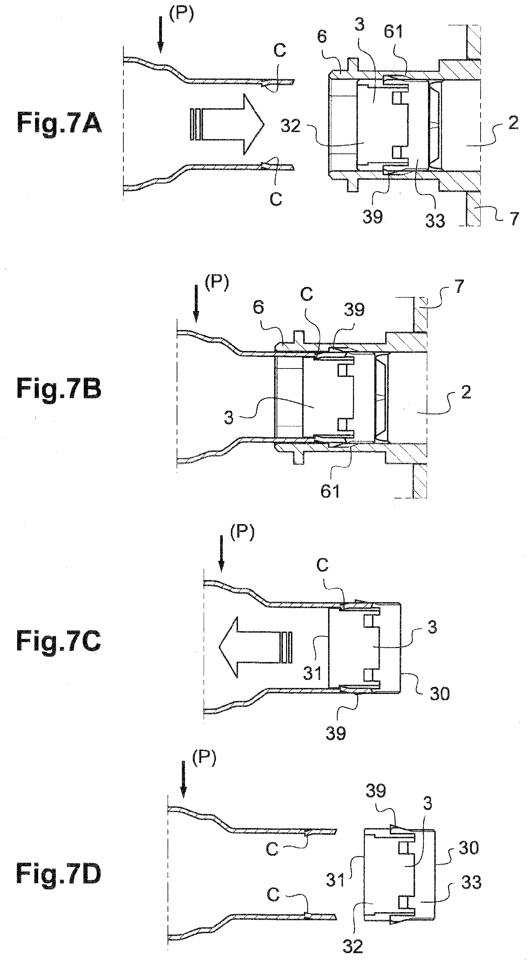

En configuration de connexion optique, l'adaptateur 3 selon l'invention est disposé avec sa face avant 30 en appui contre la face avant 20 de l'insert 2 avec chaque manchon d'alignement 35 logé dans une alvéole 34 qui reçoit une ferrule 40 d'un élément de contact optique 4 logé dans une cavité 22 (figures 6A et 7A).

Un opérateur qui souhaite procéder au démontage de l'adaptateur 3 selon l'invention approche alors une pince de préhension (P) à becs, en tant qu'outil d'extraction, par l'avant du boitier 6, c'est-à-dire du côté de la face libre ou arrière 31 de l'adaptateur 3 (figures 6A et 7A).

Il insère ainsi les becs de la pince de préhension (P) entre les faces latérales 3L et l'intérieur du boitier 6, c'est-à-dire chacun dans l'espace de dégagement 3 E prévu à cet effet, jusqu'à mettre en butée chacun des becs contre un des ergots de clipsage 39 de l'adaptateur (figures 6B et 7B).

La mise en butée des becs de la pince contre les ergots 39 provoque le rapprochement mutuel des deux becs et par là le désengagement, ou autrement dit, le déclipsage des deux ergots 39 clipsés au préalable dans les encoches 61 de la paroi intérieure du boitier 6.

L'opérateur peut alors procéder à l'extraction de l'adaptateur 3 en dehors du boitier 6 de connecteur 1, en l'agrippant avec la pince de préhension (figures 6C et 7C). A cet effet, l'outil (P) comporte sur chacun des becs un crochet (C) qui vient crocheter l'adaptateur 3 par ses faces latérales 3L.

L'opérateur libère enfin l'adaptateur 3 de la pince de préhension (figure 7D).

Une fois le démontage de l'adaptateur 3 effectué, l'opérateur peut procéder à l'inspection visuelle de tous les manchons d'alignement 35 logés dans l'adaptateur 3. Si nécessaire, il peut en outre nettoyer leur intérieur, notamment à l'aide d'un coton-tige imbibé d'alcool.

De même, l'opérateur peut procéder à l'inspection visuelle de toutes les faces optique 41 définies chacune par la ferrule 40 d'un élément de contact optique 4. Si nécessaire, il peut en outre les nettoyer, notamment à l'aide d'un coton-tige imbibé d'alcool.

Une fois le(s) nettoyage(s) éventuel(s) réalisé(s), l'opérateur peut alors remonter l'adaptateur 3 à l'intérieur du boitier 6 et le clipser à nouveau dans ce dernier.

Bien entendu, l'invention n'est pas limitée aux exemples de mise en œuvre qui viennent d'être décrits.

En particulier, bien que le connecteur 1 représenté loge uniquement des éléments de contact optique dans l'insert 2, l'invention s'applique également à un connecteur 1 qui loge également un ou plusieurs éléments de contact électrique mâles et/ou femelles dans l'insert 2.

## Revendications

1. Adaptateur (3) pour connecteur (1), notamment pour connecteur multicontacts, du type comportant au moins un insert (2) et un boitier (6) comportant en son sein au moins un insert (2), l'insert comportant au moins une cavité (22) apte à loger au moins partiellement un élément de contact optique (4), l'insert (2) présentant une face avant (20) sur laquelle débouche chaque cavité (22), l'adaptateur comportant au moins une alvéole (34) apte à loger un manchon d'alignement (35), notamment fendu, l'adaptateur (3) présentant une face avant (30) sur laquelle débouche chaque alvéole (34), l'adaptateur étant configuré pour être disposé avec sa face avant (30) en appui contre la face avant (20) de l'insert (2) de sorte à avoir chaque manchon d'alignement (35) logé dans une alvéole (34) qui reçoit une ferrule (40) d'un élément de contact optique (4) logé dans une cavité (22), l'adaptateur (3) comportant au moins un moyen de fixation amovible à l'intérieur du boitier (6) d'un connecteur, dans sa configuration d'appui de sa face avant (30) contre la face avant (20) de l'insert (2), l'adaptateur comportant au moins un ergot de clipsage (39) agencé sur une de ses faces latérales (3L) à sa face avant (30), l'ergot de clipsage étant apte à être clipsé dans une encoche de clipsage (61) agencée dans la paroi intérieure du boitier d'un connecteur,
**caractérisé par le fait qu'**il présente un espace de dégagement (3 E) permettant l'accès d'une partie d'outil de déclipsage, tel qu'un bec d'une pince de préhension (P) à un ergot de clipsage, depuis la face arrière (31) de l'adaptateur opposée à sa face avant (30), et entre une de ses faces latérales (3L) et la paroi intérieure du boitier d'un connecteur, afin de réaliser le declipsage de l'adaptateur du boitier.

2. Adaptateur selon la revendication 1, **caractérisé par le fait qu'**il comporte deux ergots de clipsage (39), l'un étant agencé sur une première de ses faces latérales (3L) et l'autre étant agencé sur une deuxième de ses faces latérales, opposée à la première.

3. Adaptateur selon l'une des revendications précédentes, **caractérisé par le fait qu'**il comporte deux pièces (32; 33) assemblées entre elles, l'une définissant la face avant (30), et l'autre la face arrière (31) de l'adaptateur opposée à sa face avant (30).

4. Adaptateur selon l'une des revendications précédentes, **caractérisé par le fait qu'**il est réalisé en au moins un matériau isolant électriquement notamment une matière plastique.

5. Adaptateur selon l'une des revendications 3 ou 4, **caractérisé par le fait que** le ou les ergots de clipsage est (sont) venu(s) de moulage avec l'une (33) de ses pièces le constituant.

6. Adaptateur selon l'une des revendications précédentes, **caractérisé par le fait que** la ou les alvéoles (34) s'étend (ent) de la face avant (30) à la face arrière (31) de l'adaptateur.

7. Adaptateur selon l'une quelconque des revendications précédentes, **caractérisé par le fait que** la ou les alvéoles (34) comporte(nt) au moins une lèvre de maintien (36), notamment deux lèvres de maintien, chacune agencée à une extrémité de l'alvéole, cette ou ces lèvres, notamment annulaires, étant apte à maintenir un manchon d'alignement (35) logé dans une alvéole.

8. Adaptateur selon l'une quelconque des revendications précédentes, **caractérisé par le fait que** le ou les manchons d'alignement (35), notamment fendu(s), est (sont) en céramique.

9. Adaptateur selon l'une quelconque des revendications précédentes, **caractérisé par le fait que** les faces avant et arrière (30, 31) de l'adaptateur sont de forme générale sensiblement rectangulaire ou carrée.

10. Adaptateur selon l'une quelconque des revendications 1 à 9, **caractérisé par le fait que** les faces avant et arrière (30, 31) de l'adaptateur sont de forme générale sensiblement en disque.

11. Connecteur, notamment un connecteur multicontacts comportant:
- au moins un insert (2) comportant au moins une cavité (22) apte à loger au moins partiellement un élément de contact optique (4), l'insert (2) présentant une face avant (20) sur laquelle débouche chaque cavité (22),
- un boitier (6) comportant en son sein ledit au moins un insert (2),
- au moins un adaptateur (3) selon la revendication 1, le boitier (6) comporte au moins un moyen de fixation (61), l'au moins un moyen de fixation amovible de l'adaptateur coopérant avec le moyen de fixation (61) du boitier pour la fixation amovible de l'adaptateur à l'intérieur du boitier (6) de connecteur, dans sa configuration d'appui de sa face avant (30) contre la face avant (20) de l'insert (2).

12. Procédé de réalisation des connexions optiques, à l'aide d'un premier connecteur (1) comportant un premier insert (2) avec des cavités (22), un deuxième connecteur apte à être accouplé au premier, comportant un deuxième insert avec des cavités, et un adaptateur selon l'une quelconque des revendications 1 à 9, l'un des premier et deuxième connecteurs comportant un boitier (6) comportant en son sein le premier ou le deuxième insert, le procédé comportant les étapes suivantes:
- fixer de manière amovible l'adaptateur au boitier de l'un des premier et deuxième connecteurs,
- monter des éléments de contact optique sur les premier et deuxième inserts,
- accoupler les connecteurs de manière à ce que l'adaptateur soit pris en sandwich entre les inserts, et réaliser des connexions optiques entre les connecteurs.

13. Procédé de maintenance d'un connecteur selon la revendication 11, comportant les étapes suivantes :
- démonter l'adaptateur (3) du boitier (6) du connecteur,
- le cas échéant, nettoyer, notamment à l'aide d'un coton-tige imbibé d'alcool l'intérieur du ou des manchons d'alignement (35) logé(s) dans l'adaptateur,
- le cas échéant, nettoyer, notamment à l'aide d'un coton-tige imbibé d'alcool, la ou les faces optique (41) définies chacune par la ferrule (40) d'un élément de contact optique (4),
- une fois le(s) nettoyage(s) éventuel(s) réalisé(s), remonter par fixation amovible l'adaptateur à l'intérieur du boitier.

## Patentansprüche

1. Adapter (3) für einen Steckverbinder (1), insbesondere für einen Multikontakt-Steckverbinder der Art, die mindestens einen Einsatz (2) und ein Gehäuse (6) aufweist, das in seinem Inneren mindestens einen Einsatz (2) aufweist, wobei der Einsatz mindestens einen Hohlraum (22) aufweist, in dem mindestens teilweise ein optisches Kontaktelement (4) aufgenommen werden kann, wobei der Einsatz (2) eine vordere Fläche (20) aufweist, an der jeder Hohlraum (22) mündet, wobei der Adapter mindestens eine Steckerbuchse (34) aufweist, in der eine insbesondere geschlitzte Ausrichthülse (35) aufgenommen werden kann, wobei der Adapter (3) eine vordere Fläche (30) aufweist, an der jede Steckerbuchse (34) mündet, wobei der Adapter dazu ausgestaltet ist, mit seiner vorderen Fläche (30) in Anlage an die vordere Fläche (20) des Einsatzes (2) angeordnet zu werden, so dass jede Ausrichthülse (35) in einer Steckerbuchse (34) aufgenommen ist, die eine Ferrule (40) eines optischen Kontaktelements (4) aufnimmt, das in einem Hohlraum (22) aufgenommen ist, wobei der Adapter (3) in seiner Konfiguration, in der seine vordere Fläche (30) an der vorderen Fläche (20) des Einsatzes (2) anliegt, mindestens ein entfernbares Befestigungsmittel im Inneren des Gehäuses (6) eines Steckverbinders aufweist, wobei der Adapter mindestens eine an einer seiner seitlichen Flächen (3L) an seiner vorderen Fläche (30) vorgesehene Einschnappnase (39) aufweist, wobei die Einschnappnase in eine in der Innenwand des Gehäuses eines Steckverbinders vorgesehene Einschnappaussparung (61) eingeschnappt werden kann,
**dadurch gekennzeichnet, dass** er einen Ausrückraum (3E) aufweist, dank dessen mit einem Teil eines Herausschnappwerkzeugs wie einer Backe einer Greiferzange (P) von der hinteren Fläche (31) des Adapters, die seiner vorderen Fläche (30) gegenüberliegt, und zwischen einer seiner Seitenflächen (3L) und der Innenwand des Gehäuses eines Steckverbinders auf eine Einschnappnase zugegriffen werden kann, um den Adapter aus dem Gehäuse herauszuschnappen.

2. Adapter nach Anspruch 1, **dadurch gekennzeichnet, dass** er zwei Einschnappnasen (39) aufweist, wobei die eine an einer ersten seiner Seitenflächen (3L) vorgesehen ist und die andere an einer zweiten seiner Seitenflächen gegenüber der ersten vorgesehen ist.

3. Adapter nach einem der vorhergehenden Ansprüche, **dadurch gekennzeichnet, dass** er zwei aneinander montierte Teile (32; 33) aufweist, wobei das eine die vordere Fläche (30) und das andere die hintere Fläche (31) des Adapters, die seiner vorderen Fläche (30) gegenüberliegt, definieren.

4. Adapter nach einem der vorhergehenden Ansprüche, **dadurch gekennzeichnet, dass** er aus mindestens einem elektrisch isolierendem Material, insbesondere einem Kunststoffmaterial, ausgeführt ist.

5. Adapter nach einem der Ansprüche 3 oder 4, **dadurch gekennzeichnet, dass** die Einschnappnase(n) mit dem einen (33) seiner Bestandteile geformt ist(sind).

6. Adapter nach einem der vorhergehenden Ansprüche, **dadurch gekennzeichnet, dass** sich die Steckerbuchse(en) (34) von der vorderen Fläche (30) zu der hinteren Fläche (31) des Adapters erstreckt(erstrecken).

7. Adapter nach einem der vorhergehenden Ansprüche, **dadurch gekennzeichnet, dass** die Steckerbuchse(n) (34) mindestens eine Haltelippe (36), insbesondere zwei Haltelippen, aufweist(aufweisen), die jeweils an einem Ende der Steckerbuchse angeordnet sind, wobei diese insbesondere ringförmige(n) Lippe(n) eine in einer Steckerbuchse aufgenommene Ausrichthülse (35) halten kann(können).

8. Adapter nach einem der vorhergehenden Ansprüche, **dadurch gekennzeichnet, dass** die insbesondere geschlitzte(n) Ausrichthülse(n) (35) aus Keramik ist(sind).

9. Adapter nach einem der vorhergehenden Ansprüche, **dadurch gekennzeichnet, dass** die vordere und die hintere Fläche (30, 31) des Adapters allgemein im Wesentlichen rechteckig oder quadratisch sind.

10. Adapter nach einem der Ansprüche 1 bis 9, **dadurch gekennzeichnet, dass** die vordere und die hintere Fläche (30, 31) des Adapters allgemein im Wesentlichen scheibenförmig sind.

11. Steckverbinder, insbesondere Multikontakt-Steckverbinder, aufweisend:
- mindestens einen Einsatz (2), der mindestens einen Hohlraum (22) aufweist, in dem mindestens teilweise ein optisches Kontaktelement (4) aufgenommen werden kann, wobei der Einsatz (2) eine vordere Fläche (20) aufweist, an der jeder Hohlraum (22) mündet,
- ein Gehäuse (6), das in seinem Inneren den mindestens einen Einsatz (2) aufweist,
- mindestens einen Adapter (3) nach Anspruch 1, wobei das Gehäuse (6) mindestens ein Befestigungsmittel (61) aufweist, wobei das mindestens eine entfernbare Befestigungsmittel des Adapters mit dem Befestigungsmittel (61) des Gehäuses zusammenwirkt, um den Adapter in seiner Konfiguration, in der seine vordere Fläche (30) an der vorderen Fläche (20) des Einsatzes (2) anliegt, entfernbar im Inneren des Steckverbindergehäuses (6) zu befestigen.

12. Verfahren zur Herstellung von optischen Verbindungen mit Hilfe eines ersten Steckverbinders (1), der einen ersten Einsatz (2) mit Hohlräumen (22) aufweist, eines zweiten Steckverbinders, der an den ersten angekoppelt werden kann und einen zweiten Einsatz mit Hohlräumen aufweist, und eines Adapters nach einem der Ansprüche 1 bis 9, wobei einer des ersten und des zweiten Steckverbinders ein Gehäuse (6) aufweist, das in seinem Inneren den ersten oder den zweiten Einsatz aufweist, wobei das Verfahren die folgenden Schritte aufweist:
- der Adapter wird entfernbar an dem Gehäuse eines des ersten und des zweiten Steckverbinders befestigt,
- optische Kontaktelemente werden an dem ersten und dem zweiten Einsatz montiert,
- die Steckverbinder werden so gekoppelt, dass der Adapter sandwichartige zwischen den Einsätzen positioniert ist, und optische Verbindungen werden zwischen den Steckverbindern hergestellt.

13. Verfahren zum Warten eines Steckverbinders nach Anspruch 11, aufweisend die folgenden Schritte:
- der Adapter (3) wird von dem Gehäuse (6) des Steckverbinders abmontiert,
- gegebenenfalls wird das Innere der in dem Adapter aufgenommenen Ausrichthülse(n) (35) mit Hilfe eines mit Alkohol getränkten Wattestäbchens gereinigt,
- gegebenenfalls wird oder werden die optische(n) Fläche(n) (41), die jeweils durch die Ferrule (40) eines optischen Kontaktelements (4) definiert ist(sind), mit Hilfe eines mit Alkohol getränkten Wattestäbchens gereinigt,
- der Adapter wird nach Ausführung der eventuellen Reinigung(en) mittels entfernbarer Befestigung wieder im Inneren des Gehäuses montiert.

## Claims

1. Adapter (3) for a connector (1), notably for a multi-terminal connector, of the type comprising at least one insert (2) and one housing (6) comprising, within it, at least one insert (2), the insert comprising at least one cavity (22) capable of at least partially housing an optical contact element (4), the insert (2) having a front face (20) on which each cavity (22) emerges, the adapter comprising at least one cell (34) capable of housing an alignment sleeve (35), notably slit, the adapter (3) having a front face (30) on which each cell (34) emerges, the adapter being configured to be disposed with its front face (30) bearing against the front face (20) of the insert (2) so as to have each alignment sleeve (35) housed in a cell (34) which receives a ferrule (40) of an optical contact element (4) housed in a cavity (22), the adapter (3) comprising at least one removable fixing means inside the housing (6) of a connector, in its configuration of bearing by its front face (30) against the front face (20) of the insert (2), the adapter comprising at least one clipping tab (39) arranged on one of its lateral faces (3L) on its front face (30), the clipping tab being able to be snap-clipped into a clipping notch (61) arranged in the internal wall of the housing of a connector, **characterized in that** it has a disengagement space (3E) allowing access by a part of an unclipping tool, such as a nose of gripping tongs (P), to a clipping tab, from the rear face (31) of the adapter opposite its front face (30), and between one of its lateral faces (3L) and the internal wall of the housing of a connector, in order to achieve the unclipping of the adapter from the housing.

2. Adapter according to Claim 1, **characterized in that** it comprises two clipping tabs (39), one being arranged on a first of its lateral faces (3L) and the other being arranged on a second of its lateral faces, opposite the first.

3. Adapter according to one of the preceding claims, **characterized in that** it comprises two parts (32; 33) joined together, one defining the front face (30) and the other the rear face (31) of the adapter opposite its front face (30).

4. Adapter according to one of the preceding claims, **characterized in that** it is produced in at least one electrically insulating material, notably a plastic material.

5. Adapter according to one of Claims 3 and 4, **characterized in that** clipping tab or tabs is or are produced by moulding with one (33) of its constituent parts.

6. Adapter according to one of the preceding claims, **characterized in that** the cell or cells (34) extends or extend from the front face (30) to the rear face (31) of the adapter.

7. Adapter according to any one of the preceding claims, **characterized in that** the cell or cells (34) comprises or comprise at least one holding lip (36), notably two holding lips, each arranged at an end of the cell, this lip or these lips, notably annular, being able to hold an alignment sleeve (35) housed in a cell.

8. Adapter according to any one of the preceding claims, **characterized in that** the alignment sleeve or sleeves (35), notably slit, is or are made of ceramic.

9. Adapter according to any one of the preceding claims, **characterized in that** the front and rear faces (30, 31) of the adapter are of generally substantially rectangular or square form.

10. Adapter according to any one of Claims 1 to 9, **characterized in that** the front and rear faces (30, 31) of the adapter are of generally substantially disc form.

11. Connector, notably a multi-terminal connector, comprising:
- at least one insert (2) comprising at least one cavity (22) capable of at least partially housing an optical contact element (4), the insert (2) having a front face (20) on which each cavity (22) emerges,
- a housing (6) comprising, within it, said at least one insert (2),
- at least one adapter (3) according to Claim 1, the housing (6) comprising at least one fixing means (61), the at least one removable fixing means of the adapter cooperating with the fixing means (61) of the housing for the removable fixing of the adapter inside the connector housing (6), in its configuration of bearing by its front face (30) against the front face (20) of the insert (2).

12. Method for producing optical connections, using a first connector (1) comprising a first insert (2) with cavities (22), a second connector capable of being coupled to the first, comprising a second insert with cavities, and an adapter according to any one of Claims 1 to 9, one of the first and second connectors comprising a housing (6) comprising, within it, the first or the second insert, the method comprising the following steps:
- removably fixing the adapter to the housing of one of the first and second connectors,
- mounting optical contact elements on the first and second inserts,
- coupling the connectors in such a way that the adapter in sandwiched between the inserts, and making optical connections between the connectors.

13. Method for maintaining a connector according to Claim 11, comprising the following steps:
- dismantling the adapter (3) from the housing (6) of the connector,
- if necessary, cleaning, notably using an alcoholsoaked cotton swab, the inside of the alignment sleeve or sleeves (35) housed in the adapter,
- if necessary, cleaning, notably using an alcoholsoaked cotton swab, the optical face or faces (41) each defined by the ferrule (40) of an optical contact element (4),
- once the possible cleaning operation or operations have been performed, refitting, by removable fixing, the adapter inside the housing.
